# EUROPEAN PATENT SPECIFICATION

(11) **EP 0 243 263 B1**
(45) Date of publication and mention of the grant of the patent: **19.04.1995**
(21) Application number: 87400918.6
(22) Date of filing: 21.04.1987
(51) Int. Cl.: A01N 25/18

(54) **A dispenser form for sustainedly releasing sex pheromone of insects**
Spender für die verzögerte Freisetzung von Insektensexualpheromonen
Distributeur pour libérer lentement des phéromones sexuelles d'insectes

(30) Priority: 23.04.1986 JP 93913/86
(43) Date of publication of application: 28.10.1987
(73) Proprietor: Shin-Etsu Chemical Co., Ltd., Chiyoda-ku Tokyo 100 (JP)
(72) Inventor: Ogawa, Kinya, Kawasaki-shi Kanagawa-ken (JP); Yamamoto, Akira, Joetsu-shi Niigata-ken (JP); Nagura, Shigehiro, Joetsu-shi Niigata-ken (JP)
(74) Representative: Armengaud Ainé, Alain

(56) References cited:
- EP-A- 0 160 151
- EP-A- 0 194 896
- DE-A- 2 147 670
- US-A- 4 158 440
- US-A- 4 387 849
- US-A- 4 445 641

## Description

### BACKGROUND OF THE INVENTION

The present invention relates to a dispenser form for sustainedly releasing a sex pheromone of insects or, more particularly, to a dispenser body capable of sustainedly releasing a sex pheromone compound of a species of insects at a constant rate over a long period of time into the atmosphere with an object to control population of the species of insectan pest.

Along with the progress of the technoloqy for controlling the population of insect pests by utilizing the sex pheromone compound of the particular species of insect, various attempts and proposals have been hitherto made to obtain a constant or controlled rate of pheromone emission into the atmosphere of the field over a length of time during which an effective concentration of the pheromone compound in the atmosphere should desirably be maintained. For example, it is already practiced to prepare a dispenser form containing the pheromone compound and a large number of such dispenser forms are distributed over the field so as to emit the pheromone compound in the form of vapor at a controlled rate. It is highly desirable in order to effectively and economically utilize the sex pheromone that the rate of pheromone emission from the dispensers should be controlled at such a rate that the concentration of the compound in the atmosphere should be maintained to exhibit the desired effect over a desired length of time under varied environmental or, in particular, meteorological conditions such as temperature, humidity, wind velocity and the like. Notwithstanding such a desirable condition of uniform rate of pheromone emission, use of dispenser forms is unavoidably accompanied by a problem that the rate of pheromone emission therefrom is too large at one time and too small at the other, especially, when the pheromone compound should be released by permeating barrier walls made of a single kind of a polymeric material.

When the rate of pheromone emission is too high, the serviceable life of the dispenser forms would consequently expire too early before the end of the term of desired length. When the rate of pheromone emission is too small, on the other hand, a considerable portion of the pheromone compound initially contained in the dispenser forms remains unutilized to cause a great economic disadvantage.

When the serviceable life of the pheromone dispensers is unduly short, it would be necessary that the dispenser forms must be distributed over the field several times in a season taking a large amount of the labor cost therefor in addition to the problem that the rate of pheromone emission from the dispensers may be unduly decreased in the latest stage of the serviceable life so that the desired effect can no longer be obtained. While it is highly desirable that a single round of the work for the distribution of dispensers over the field in a season is sufficient to sustain the necessary amount of the released pheromone compound and that the necessary minimum number of the dispenser forms to be distributed over the field should desirably be as small as possible per unit area of the field provided that the effect by the sex pheromone compound is not unduly reduced, a generally encountered difficulty when a single dispenser form contains an increased amount of the sex pheromone compound is that the rate of pheromone emission steadily decreases from the beginning to the end of the serviceable life of the dispenser with a considerably large difference in the rate of pheromone emission therebetween.

U.S. Patent No. 4,600,146 discloses a type of pheromone dispenser which is a tubular body made of a polymeric resin such as polyethylene or a copolymer of ethylene and vinyl acetate containing the sex pheromone compound in the capillary bore. The results of the field tests using such dispensers, however, indicated that the rate of pheromone emission therefrom was unavoidably somewhat decreased in the latter half of the serviceable life as is reported in Journal of Economic Entomology, volume 78, No. 6, pages 1431-1436 (1985).

On the other hand, it would not be an easy matter to sustainedly release a sex pheromone compound having a relatively large vapor pressure over a long period of time and no effective proposals have yet been made in this regard.

The inventors have continued extensive investigations with an object to develop a means, in a dispenser form in which a sex pheromone compound is enclosed in barrier walls, for solving the problem in the prior art dispensers that the rate of pheromone emis-ion steadily decreases, especially, in the latter half of the serviceable life of the dispenser and to provide a means for sustainedly releasing a sex pheromone compound having a relatively large vapor pressure over a long period of time leading to completion of the present invention.

### SUMMARY OF THE INVENTION

Thus, the present invention provides a novel dispenser form free from the above described problems and disadvantages in the prior art dispensers and capable of sustainedly releasing a sex pheromone compound of insects at a constant rate over a period of 1 to 6 months.

Consequently, the invention provides an improvement, in a tubular dispenser form having an inner diameter in the range from 0.5 to 4 mm and a length in the range from 50 to 1000 mm for containing at least 40 mg of a sex pheromone compound of insects in which the pheromone compound permeates through a barrier wall made of a polyethylene or a copolymeric resin of vinyl acetate and polyethylene and is sustainedly released from the outer surface of the barrier wall, which comprises coating from 30% to 90% of the outer surface area of the barrier wall with a coating material which is impermeable or hardly permeable to the sex pheromone compound, said coating material having an equilibrium swelling of 1% by weight or smaller at 20°C with the sex pheromone compound contained in the dispenser form.

### BRIEF DESCRIPTION OF THE DRAWING

FIGURES 1a and 1b are each an axial cross sectional view of a dispenser form of the invention for sustainedly releasing a sex pheromone compound.

FIGURES 2 and 3 are each a graphic showing of the amount of the pheromone compound remaining in the dispenser as a function of days of exposure determined in the experiments in Examples 1 and 2, respectively.

### DETAILED DESCRIPTION OF THE PREFERRED EMBODIMENTS

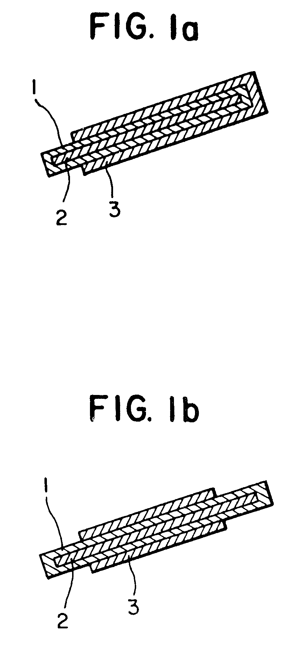

As is illustrated in FIGURES 1a and 1b, the dispenser form of the present invention for sustainedly releasing a sex pheromone compound of insects is a tubular body having a barrier wall 1 made of a polymeric material and containing a sex pheromone compound 2 therein. The sex pheromone compound 2 enclosed in the tubular body permeates through the barrier wall 1 and is emitted to the outside atmosphere from the outer surface of the barrier wall 1. Different from conventional dispenser forms of such a type, the outer surface of the barrier wall 1 is partly coated with a material 3 which is impermeable or hardly permeable to the sex pheromone compound, which is referred to as the coating material hereinbelow. The sex pheromone compound is emitted naturally only from the uncoated portion of the outer surface of the barrier walls 1 and not from the coated portion.

The barrier wall 1 of the inventive dispenser form is made of a polyolefin or a copolymeric resin of vinyl acetate and an olefin. In particular, the barrier wall 1 should be made of a polyethylene or a copolymer of vinyl acetate and ethylene of which the content of the vinyl acetate moiety is 20% by weight or smaller. The configuration of the inventive dispenser is not particularly limitative including spherical, ellipsoidal, cylindrical and plate-like ones having a hollow space surrounded by the walls to serve as the barrier walls and containing the sex pheromone compound in the hollow space. A particularly preferable configuration of the dispenser form is a tube having an inner diameter in the range from 0.5 to 4 mm and a length in the range from 50 to 1000 mm with both ends tightly sealed after introduction of the sex pheromone compound into the capillary bore. The outer surface of the barrier walls 1 should be partly coated with a coating layer 3 of the coating material which should have an equilibrium swelling not exceeding 1% by weight or, preferably, not exceeding 0.5% by weight at 20°C with the sex pheromone compound enclosed in the dispenser body. Suitable coating materials are exemplified by polymeric materials including polyvinylidene chloride, polyvinylidene fluoride, polyacrylonitrile, polysulfone, polycarbonate, polyamides, e. g. nylon, polymers of acrylic esters, e. g. polymethyl methacrylate, cellulose esters, e. g. cellulose acetate, regenerated cellulose, polyvinyl alcohol, polyurethane and the like. Metal foils may also be used.

The coating layer 3 of the coating material may be formed by any known method without particular limitatations. For example, the outer surface of the barrier wall 1 is coated with a coating composition containing the coating material or a film of the coating material is adhesively bonded or welded to the outer surface of the barrier wall 1, it is sometimes sufficient to merely put a sheath or cap made of the coating material on to the barrier wall 1. When the dispenser body is in a long tubular form, the covering sheath of the coating material should have a length somewhat smaller than the dispenser body so that the end portions of the dispenser body are left uncovered when the covering sheath is put on the dispenser body and the sex pheromone compound is released from the uncovered portions of the tubular body. The covering sheath of the coating material should not be too long because the surface area of the barrier walls left uncovered and available for the emission of the sex pheromone compound is unduly decreased so that the rate of pheromone emission is decreased to have a considerably large portion of the pheromone compound initially contained left unutilized.

It is usually preferable that the coating layer of the coating material occupies from 30% to 90% of the whole outer surface of the barrier walls. The value of the equilibrium swelling of the coating material by the sex pheromone compound can be determined by immersing a chip of the coating material in the sex pheromone compound at the specified temperature and measuring the weight increase of the chip after a sufficiently long time of immersion.

The dispenser form of the invention may contain a single sex pheromone compound or a mixture of two kinds or more of such sex pheromone compounds. When the sex pheromone compound is susceptible to photochemical decomposition, it is advantageous that the polymeric material forming the barrier walls is admixed with an ultraviolet absorber or a coloring agent such as dyes and pigments and, simultaneously or alternatively, the sex pheromone compound contained in the dispenser form is also admixed with an antioxidant or an ultraviolet absorber dissolved therein. It is also optional that the sex pheromone compound is admixed with other known additives including fillers, solvents and so on.

As is understood from the above description, the dispenser form of the invention is very advantageous in respect of the extremely uniform rate of pheromone emission over the whole period of the serviceable life. This advantage of constant rate of pheromone emission can be obtained over a long period of time even when the amount of the sex pheromone compound contained in each of the dispenser forms exceeds 70 mg. Moreover, the dispenser form of the invention is applicable even to a sex pheromone compound having a relatively high vapor pressure and such a sex pheromone compound contained in the dispenser form can be sustainedly released by substantially extending the serviceable life of the dispenser while maintaining a uniform rate of pheromone emission.

In the following, the dispenser form of the present invention for sustainedly releasing a sex pheromone compound is described in more detail by way of examples.

### Example 1.

A dispenser form, which is referred to as the dispenser A hereinbelow, was prepared by introducing 75 mg of E-5-decenyl acetate into a capillary tube made of a high-density polyethylene and having an inner diameter of 0.8 mm and an outer diameter of 1.5 mm followed by weld-sealing and cutting of the tube in a length of 20 cm. Three more dispenser forms were prepared each in the same manner as in the dispenser A and were coated with a latex of polyvinylidene chloride over 30%, 60% and 80% of the whole outer surface area in a coating thickness of about 10 »m as dried leaving uncoated surface areas at both ends of the tubular forms. These partially coated dispenser forms are referred to as the dispensers B, C and D, respectively. Furthermore, one more dispenser form was prepared in the same manner as above except that the whole outer surface was coated with the polyvinylidene chloride latex in the same thickness. This entirely coated dispenser form is referred to as the dispenser E hereinbelow.

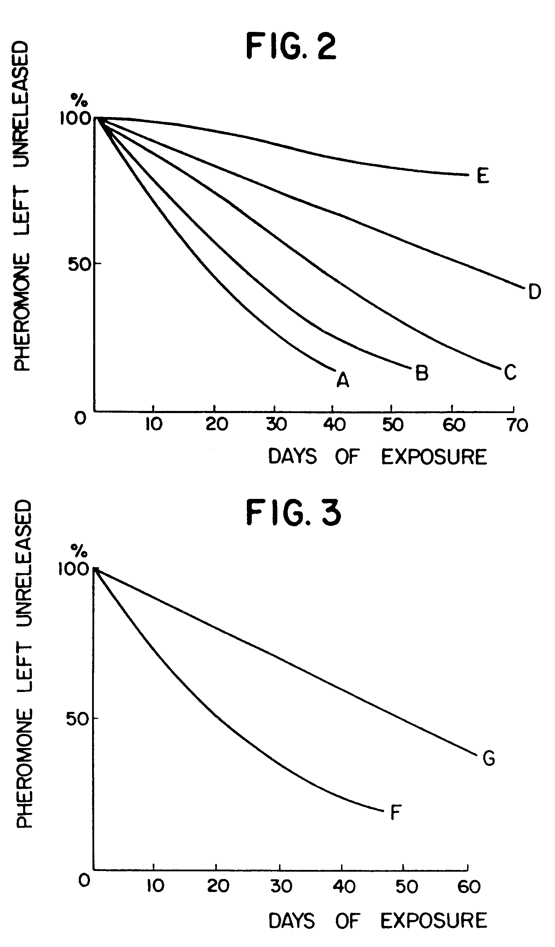

These five dispenser forms A to E were kept standing at 30°C under a stream of air of 1.5 meters/second velocity and decrease of weight of each dispenser was determined periodically over a period of 70 days to calculate the percentage of the amount of the sex pheromone compound remaining in the dispenser. The results are shown in FIGURE 2 by the curves A to E for the dispensers A to E, respectively.

As is seen in this figure, the rate of pheromone emission from the uncoated dispenser A was remarkably large with a great difference between the rates at the initial and latest stages of the testing period while the rate of pheromone emission form the dispenser E was unduly small to leave a considerably large amount of the initially introduced pheromone compound unreleased. On the contrary, the rates of pheromone emission were adequate and quite uniform over the testing period from the partially coated dispensers B, C and D to ensure sufficiently long serviceable lives.

The equilibrium swelling of the polyvinylidene chloride in the sex pheromone compound was determined by immersing a chip of the resin of 20 mm by 20 mm by 1 mm dimensions in E-5-decenyl acetate at 20°C and determining the weight increase after a sufficient length of time to find a value of 0.2% by weight.

### Example 2.

A dispenser form, which is referred to as the dispenser F hereinbelow, was prepared by introducing 90 mg of 14-methyl-1-octadecene into a capillary tube made of a copolymer of 94% by weight ethylene and 6% by weight of vinyl acetate and having an inner diameter of 1.5 mm and an outer diameter of 2.2 mm followed by weld-sealing and cutting of the tube in a length of 10 cm. Another dispenser form was prepared in just the same manner as above and coated on 70% area of the outer surface thereof with a solution of cellulose diacetate in a coating thickness of about 8 »m as dried leaving 30% area of the outer surface uncoated at one end of the tubular form. This partially coated dispenser form is referred to as the dispenser G hereinbelow.

These uncoated and partially coated dispenser forms F and G were subjected to the determination of the rate of pheromone emission therefrom in the same manner as in Example 1 to give the results shown in FIGURE 3 by the curves F and G, respectively. As is seen in this figure, the rate of pheromone emission from the dispenser F was too large with a great difference in the rates between the first and second halves of the testing period while the rate of pheromone emissiion was adequate and quite uniform from the partially coated dispenser G.

The equilibrium swelling of the polyvinylidene chloride in the sex pheromone compound was determined by immersing a chip of the resin of 20 mm by 20 mm by 1 mm dimensions in 14-methyl-1-octadecene at 20°C and determining the weight increase after a sufficient length of time to find a value of 0.5% by weight.

## Claims

1. An improvement, in a tubular dispenser form having an inner diameter in the range from 0.5 to 4 mm and a length in the range from 50 to 1000 mm for containing at least 40 mg of a sex pheromone compound of insects in which the pheromone compound permeates through a barrier wall made of a polyethylene or a copolymeric resin of vinyl acetate and polyethylene and is sustainedly released from the outer surface of the barrier wall, which comprises coating from 30% to 90% of the outer surface area of the barrier wall with a coating material which is impermeable or hardly permeable to the sex pheromone compound, said coating material having an equilibrium swelling of 1% by weight or smaller at 20°C with the sex pheromone compound contained in the dispenser form.

2. The improvement as claimed in claim 1 wherein the coating material is selected from the group consisting of polyvinylidene chloride, polyvinylidene fluoride, polyacrylonitrile, polysulfone, polycarbonate, polyamide, polymer of acrylic acid ester, cellulose ester, regenerated cellulose, polyvinyl alcohol and polyurethane.

## Patentansprüche

1. Verbesserter röhrchenförmiger Spender mit einem Innendurchmesser von 0.5 bis 4 mm und einer Länge von 50 bis 1000 mm für einen Inhalt von mindestens 40 mg einer Insektensexual-Pheromon-Verbindung, bei dem die Pheromon-Verbindung eine Trennwand aus einem Polyethylen oder einem copolymeren Harz aus Vinylacetat und Polyethylen durchdringt und von der äußeren Oberfläche der Trennwand verzögert freidesetzt wird, wobei die Trennwand eine Beschichtung auf 30 bis 90 % der Fläche ihrer äußeren Oberfläche mit einem Beschichtungsmaterial aufweist, das für die Sexualpheromon-Verbindung undurchlässig oder kaum durchlässig ist und bei 20° C im Gleichgewicht eine Quellung von 1 Gew.-% oder weniger mit der im Spender enthaltenen Sexualpheromon-Verbindung erreicht.

2. Verbesserter Spender nach Anspruch 1,
wobei das Beschichtungsmaterial ausgewählt ist aus der Gruppe bestehend aus Polyvinylidenchlorid, Polyvinylidenfluorid, Polyacrylnitril, Polysulfon, Polycarbonat, Polyamid, einem Polymer aus Acrylsäureester, Celluloseester, regenerierter Cellulose, Polyvinylalkohol und Polyurethan.

## Revendications

1. Amélioration, dans une forme de distributeur tubulaire ayant un diamètre interne dans la gamme de 0,5 à 4 mm et une longueur dans la gamme de 50 à 1 000 mm destinée à contenir au moins 40 mg d'un composé de phéromone sexuelle d'insectes, dans laquelle le composé phéromone filtre à travers une paroi barrière faite d'un polyéthylène ou d'une résine copolymère d'acétate de vinyle et de polyéthylène et est libéré de façon soutenue de la surface externe de la paroi barrière, qui comprend un revêtement couvrant 30% à 90% de la surface externe de la paroi barrière avec une matière de revêtement qui est imperméable ou à peine perméable au composé phéromone sexuelle, ladite matière de revêtement ayant un gonflement à l'équilibre de 1% en poids ou moins à 20°C avec le composé phéromone sexuelle contenu dans la forme de distributeur.

2. Amélioration selon la revendication 1, dans laquelle la matière de revêtement est choisie dans le groupe formé par le poly(chlorure de vinylidène), le poly(fluorure de vinylidène), le polyacrylonitrile, la polysulfone, le polycarbonate, le polyamide, un polymère d'ester d'acide acrylique, un ester cellulosique, la cellulose régénérée, le poly(alcool vinylique) et le polyuréthanne.
